# EUROPÄISCHE PATENTSCHRIFT

(11) **EP 0 399 945 B1**
(45) Veröffentlichungstag und Bekanntmachung des Hinweises auf die Patenterteilung: **24.05.1995**
(21) Anmeldenummer: 90810020.9
(22) Anmeldetag: 09.01.1990
(51) Int. Cl.: G01N 21/89, G01N 33/36

(54) **Vorrichtung zum Erkennen von Verunreinigungen, Fremdstoffen und -fasern in textilem Fasermaterial**
Apparatus for the detection of contaminations, impurities and fibres in textile fibre materials
Dispositif de détection des contaminations, impuretés et fibres étrangères dans un matériau à fibres textiles

(30) Priorität: 26.05.1989 CH 2127/89
(43) Veröffentlichungstag der Anmeldung: 28.11.1990
(73) Patentinhaber: Scheinhütte, Hans-Jürgen, CH-8834 Schindellegi (CH)
(72) Erfinder: Scheinhütte, Hans-Jürgen, CH-8834 Schindellegi (CH)
(74) Vertreter: Patentanwälte Schaad, Balass, Menzl & Partner AG

(56) Entgegenhaltungen:
- EP-A- 0 197 763
- FR-A- 2 250 989
- US-A- 2 824 488

## Beschreibung

### Die Erfindung betrifft eine Vorichtung zum Erkennen von Verunreinigungen, Fremdstoffen und -fasern in textilem Fasermaterial.

Bei der Aufbereitung von Baumwolle zum Kardieren ist es erforderlich, die Baumwolle von Pflanzen- und Schalenteilen zu reinigen. Die dazu eingesetzten Reiniger haben üblicherweise eine schnell rotierende Trommel, die mit einer sog. Garnitur, d.h. mit Metallzähnen überzogen ist. Die Baumwolle verhängt sich an diesen Zähnen, wobei schwerere Verunreinigungen, insbesondere Schalenteile, durch die Fliehkraft von der Trommel weg nach außen gezogen werden. Dort werden sie von sog. Messern abgestreift und so ausgeschieden. Bei gewissen Verunreinigungen, insbesondere bei Bändern, Geweben und Plastikfolien, versagt dieses Reininungsverfahren, da sich diese Stoffe so intensiv in der Garnitur verhaken, daß sie nicht oder nur zum Teil abgestreift werden. Ein Teil verbleibt häufig in der gereinigten Baumwolle und ist mit dieser so innig vermischt, daß er später beim Kardieren weiter zerkleinert und schließlich der Spinnmaschine zugeführt wird. Hier oder auch erst beim Weben treten dann Fadenbrüche auf, die zu teuren Stillstandszeiten führen. Manchmal wirken sich die Fremdfasern sogar erst im fertigen Gewebe z.B. beim Färben aus und führen dann durch Qualitätsminderung zu hohen Kosten.

Eine Möglichkeit, die Anzahl der Fremdfasern im Garn zu reduzieren, besteht darin, im Vorwerk zusätzlich spezielle Reiniger einzusetzen, die unter Anwendung geeigneter physikalischer Effekte gezielt die Fremdfasern entfernen, wie in CH 665 430 beschrieben.

Der nachträgliche Einbau solcher Reiniger ist jedoch mit erheblichen baulichen Veränderungen der Flocken-Förderanlagen verbunden.

Eine andere Möglichkeit ist, die üblicherweise sowieso vorhandenen sog. Garnreiniger durch eine geeignete Vorrichtung so zu ergänzen, daß sie diese Aufgabe übernehmen, können.

Bei der Herstellung von sog. Ringgarn entstehen zunächst relativ kleine Garnspulen, sog. Kopse. Für die Weiterverarbeitung benötigt man erheblich größere Spulen. Daher ist ein Umspulvorgang unerläßlich. Bei diesem ist es üblich, die Garnqualität zu überprüfen und ggf. Garnfehler zu entfernen. Dazu dienen sog. Garnreiniger. Diese können durch optische oder kapazitive Bewertung des Garns Dick- u. Dünnstellen sowie sog. Doppelfäden erkennen.

Sofern die Fremdfasern solche Fehler erzeugen, werden sie von diesen Reinigern bereits erfaßt. Es besteht aber eine erhebliche Wahrscheinlichkeit, daß die Fremdfasern in gleicher Weise wie die Baumwollfasern eingesponnen werden und keinen solchen Garnfehler bewirken, andererseits aber bei der Weiterverarbeitung des Garns oder Gewebes durchaus stören. Es besteht also ein Interesse an einer Vorrichtung, die Fremdfasern erkennen und beseitigen kann.

Zu diesem Zweck ist bereits in der EP-A-0 197 793 ein Verfahren vorgeschlagen worden, das ebenfalls die Farbabweichung der Fremdfasern ausnutzt.

Bei diesem Verfahren durchläuft das Garn eine diffus beleutete Kammer. Durch eine kleine öffnung fällt Licht vom Garn und dem Kammer-Hintergrund auf einen Sensor. Da der Kammer-Hintergrund so ausgebildet ist, daß sich das Garn optisch von ihm nicht abhebt, bewirken die unvermeidlichen Dickenschwankungen des Garns keine Signaländerung am Sensor Bei farblich abweichenden Fremdfasern kommt jedoch mehr od. weniger Licht zum Sensor, und es entsteht ein verwertbares Ausgangssignal. Die Abstimmung von Garn und Hintergrund ist jedoch bei Verschmutzung der Meßeinrichtung problematisch.

Die in den Ansprüchen 1 und 3 definierten Vorrichtungen umgehen dieses Problem, indem sie nicht die Abweichungen von einem Garn/Hintergrund-Mischsignal bewerten, sondern die unterschiedliche Rückstrahlung bei zwei oder mehreren Farben.

Nachfolgend wird die Erfindung anhand der Zeichnungen erläutert. Es zeigt:
Abb.1 eine Vorrichtung gemäß einer ersten Ausführungsform der Erfindung, und
Abb.2 eine Vorrichtung gemäß einer zweiten Ausführungsform in Verbindung mit einem Garnreiniger.

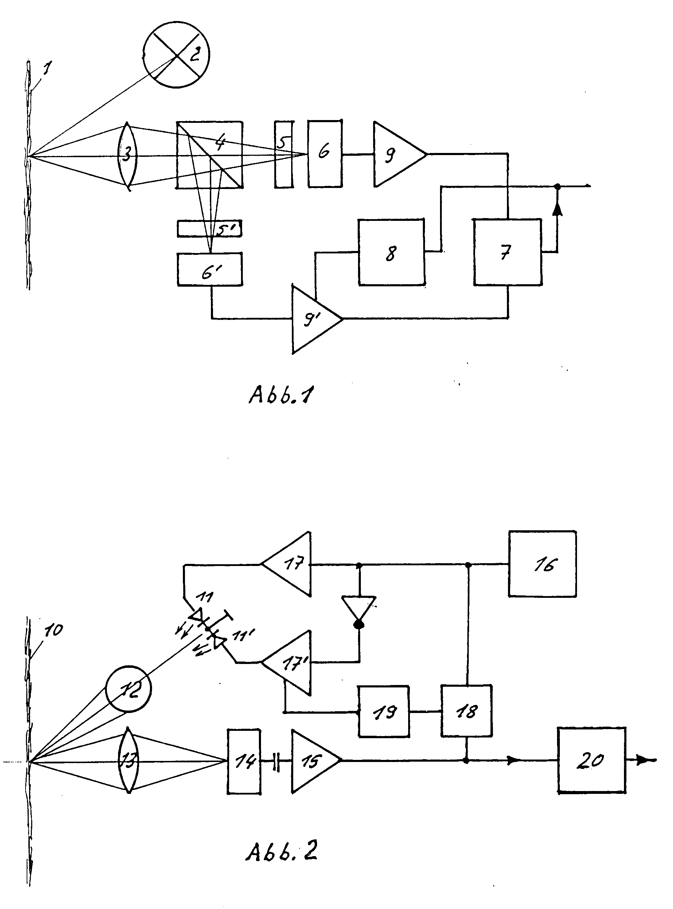

Bei der Vorrichtung nach Abb.1 wird das Fasermaterial 1 durch die Lichtquelle 2 mit mehrfarbigem bzw. weißen Licht beleuchtet. Eine Optik 3 erzeugt mit Hilfe des Strahlteilers 4 je eine Abbildung des Garns auf den Sensoren 6 bzw. 6′. Durch die vorgeschalteten Farbfilter 5 bzw. 5′ sind die Sensoren jeweils nur für eine Farbe empfindlich, z.B. 6 für rot und 6′ für grün. Die Ausgangssignale der Sensoren sind über die Verstärker 9 bzw.9′ zu einer elektronischen Differenzschaltung 7 geführt. Deren Ausgangssignal wird durch den Regler 8, der mindestens einen der Verstärker 9 bzw.9′ regelt, konstant gehalten, z.B. auf 0 V. Wenn sich nun die vom Garn reflektierte Lichtmenge ändert, z.B. durch eine Verdickung, so hat dies keinen Einfluß auf das Ausgamgssignal, da beide Sensoren gleich reagieren. Treten langsame Farbänderungen auf, so werden diese ausgeregelt, ebenfalls eine etwaige Drift der Sensoren. Die Regelgeschwindigkeit ist aber so niedrig gehalten, daß bei einer sprunghaften Farbänderung des Garns ein positives od. negatives Ausgangssignal entsteht.

Natürlich ist grundsätzlich eine Farbänderung denkbar, die bei beiden Filtern 5 u.5′ eine genau gleiche Intensitätsänderung bewirkt. Dazu kann die Einrichtung ggf. auf 3 oder 4 Farben erweitert werden.

In US-A-2 824 488 ist eine Vorrichtung beschrieben, die es gestattet, den Prozentsatz verschiedener Fasern in einem Fasergemisch zu erkennen, und die eine gewisse Ähnlichkeit mit dieser Anordnung aufweist. Das dort benutzte Verfahren, nämlich die Drehung der Polarisationsebene, erfordert jedoch eine Durchstrahlung des Fasergemisches, was auf einer Abnehmerwalze nicht möglich ist. Bei Reflexion wird die Polarisationsebene nur an blanken Oberflächen verändert, aber nicht an Fasern. Zwar sind in jenem Patent auch Farbfilter erwähnt. Diese dienen aber nur zum Blockieren von Farbeffekten, die bei Verwendung von Polarisationsfiltern auftreten.

Abb.2 zeigt eine Vorrichtung zur Durchführung des Verfahrens in Verbindung mit einem Garnreiniger.
Das Garn 10 wird durch die LED's 11 u. 11′ mit Hilfe der Zylinderlinse 12 beleuchtet. Die Optik 13 bildet ein kurzes Stück des Garns auf dem Sensor 14 ab. Um von den Einflüssen des Umgebungslichtes unabhängig zu sein, ist es allgemein üblich, mit gepulstem Licht zu arbeiten. Deshalb ist der dem Sensor 14 nachgeschaltete Verstärker 15 ein Weckselspannungsverstärker. Da das Verfahren mindestens 2 Lichtfarben benötigt ist z.B. 11 eine rote und 11′ eine grüne LED. Damit der Strahlengang für beide Farben identisch ist, empfiehlt es sich eine Zweifarben-LED zu verwenden.

So ergibt sich gegenüber der Abb. 1 die physikalische Umkehr. Statt einer breitbandigen Lichtquelle und zweier selektiver Sensoren sind hier 2 schmalbandige Lichtquellen und ein breitbandiger Sensor günstiger.

Durch den Rechteckgenerator 16 wird über die Treiber 17 bzw. 17′ mit z.B. 20 kHz abwechselnd die rote und die grüne LED eingeschaltet. Der Sensor 14 empfängt beide Farben. Wenn die empfangene Intensität bei beiden Farben gleich ist erscheint an seinem Ausgang kein 20 kHz-Signal. Wenn sie unterschiedlich ist, wird durch den Phasendiskriminator 18 festgestellt, welche Farbe die größere Intensität liefert und durch den Regler 19 mindestens einer der Treiber 17 bzw 17′ so gesteuert, daß sich Gleichheit einstellt. Infolge der niedrigen Regelgeschwindigkeit erscheint aber bei einer sprunghaften Intensitätsdifferenz ein entsprechendes Signal am Ausgang des Verstärkers 15. Dieses wird über den Geichrichter 20 zur weiteren Auswertung dem nachgeschalteten konventionellen Garnreiniger zugeleitet.

## Patentansprüche

1. Vorrichtung zum Erkennen von Verunreinigungen, Fremdstoffen und -fasern in textilem Fasermaterial, in der mindestens eine breitbandige Lichtquelle (2) vorhanden ist, die das Fasermaterial (1) beleuchtet, in der mindestens 2 Sensoren (6,6′) mit Einrichtungen zum selektiven Empfang einzelner Wellenlängen (5,5′) aus dem breitbandigen Licht vorgesehen sind, in der diesen Sensoren (6,6′) Verstärker (9,9′) nachgeschaltet sind und bei mindestens einem dieser Verstärker (9′) der Verstärkungsfaktor veränderbar ist, in der eine Schaltung (7) vorhanden ist, die die Differenz der Ausgangsspannungen der Verstärker (9,9′) ermittelt, in der ein Regler (8) vorhanden ist, dem diese Differenzspannung zugeführt wird und, in der der Regler den Verstärkungsfaktor des erwähnten Verstärkers regelt, wobei die Regelgeschwindigkeit so niedrig ist, daß langsame Farbänderungen des Fasermaterials ausgeregelt werden, während bei einer sprunghaften Farbänderung des Fasermaterials ein Ausgangssignal entsteht.

2. Vorrichtung nach Anspruch 1, in der mit Hilfe einer Optik (3) und Strahlteilern (4) das Licht von genau dem gleichen Stück Fasermaterial auf die zwei oder mehrere Sensoren (6,6′) geleitet wird.

3. Vorrichtung zum Erkennen von Verunreinigungen, Fremdstoffen und -fasern in textilem Fasermaterial, insbesonder im Garn, in der mindestens zwei Lichtquellen (11,11′) mit unterschiedlicher Wellenlänge vorhanden sind, in der Treiber (17,17′) zum Betrieb dieser Lichtquellen vorgesehen sind wobei die Treiber zum abwechselnden Beleuchten des Fasermaterials mit einem Rechteckgenerator (16) verbunden sind, und in der über mindestens einer dieser Treiber (17′) die Lichtintensität mindestens einer Lichtquelle (11′) gesteuert wird, in der ein Sensor (14) im Multiplexbetrieb zum Empfang des vom Fasermaterial reflektierten Lichtes vorhanden ist, in der der Ausgang dieses Sensors mit einem Verstärker (15) verbunden ist, in der der Ausgang dieses Verstärkers mit einem Phasendiskriminator (18) verbunden ist, der die Phase der Ausgansspannung mit der jenigen des Rechteckgenerators (16) vergleicht und, dessen Ausgang mit einem Regler (19) verbunden, ist, der mit dem mindestens einen Treiber (17′) verbunden ist und diesen steuert, wobei die Regelgeschwindigkeit des Reglers (19) so niedrig ist, daß langsam entstehende Intensitätsdifferenzen zwischen dem reflektierten Licht unterschiedlicher Wellenlängen ausgeregelt werden, während bei einer sprunghaften Intensitätsdifferenz, ein dieser Intensitätsdifferenz entsprechendes Signal am Ausgang des Verstärkers (15) entsteht.

4. Vorrichtung nach Anspruch 3, in der als Lichtquellen (11,11′) eine oder mehrere Zweifarben- LED's vorhanden sind.

## Claims

1. Apparatus for detection of contaminations, foreign bodies and foreign fibres in textile fibrous material, comprising:
at least one broadband light source (2), which illuminates the fibrous material (1),
a plurality of sensors (6,6′) with means for selective light detection on different frequencies (5,5′),
a plurality of amplifiers (9,9′),at least one of them (9′) gaincontrolled, which are connected to said sensors,
a circuit (7), which outputs the difference of the output voltages of said amplifiers,
a regulator (8), which is fed by the output of said circuit (7) and which controls the gain of said amplifier (9′) whereas the speed of the regulation is so low, that smooth changes of the colour of the fibrous material (1) are suppressed, while a steep change of the colour causes an output signal.

2. Apparatus according to claim 1, in which by use of lenses (3) and beam dividers (4) the reflected light of an identical part of the fibrous material (1) is led to two or more sensors (6,6′).

3. Apparatus for detection of contaminations, foreign bodies and foreign fibres in textile fibrous material, comprising:
at least 2 light sources of different frequencies (11.11′)
a plurality of buffers (17,17′) to drive these light sources, at least one of them (17′) with means to control the light intensity of the corresponding source (11′),
a square wave generator (16), which drives said buffers alternately,
a sensor (14) for multiplexed detection of the reflected light from the fibrous material (10),
an amplifier (15), which is connected to said sensor,
a phase discriminator (18), which compares the phase of the output of said amplifier (15) and said square wave generator (16),
a regulator (19), which is connected to the output of said phase discriminator (18) and controls at least one of said buffers (17′), whereas the speed of the regulation is so low, that smooth changes of the difference of the intensity of the reflected light on different frequencies are suppressed, while a steep change of the difference of the intensity causes an output signal at the output of the amplifier (15), which is adequate to the difference of the intensity.

4. Apparatus according to claim 3, in which the light sources (11,11′) are bicolor LEDs.

## Revendications

1. Appareil pour la détection de contaminations, corps et fibres étrangers dans du matériel en fibres textiles, comprenant:
au moins une source de lumière (2) à bande large qui illumine le matériel en fibres (1),
au moins 2 capteurs (6,6′) avec dispositifs pour la réception sélective de différentes longueurs d'ondes (5,5′) en provenance de la lumière à large bande par connexion à des amplificateurs (9,9′), où au moins chez un des amplificateurs (9′) le facteur d'amplification est modifiable, un circuit (7) qui constate la différence de la tension de sortie des amplificateurs (9,9′),
un régulateur (8), recevant cette tension de différence et regulant le facteur d'amplification du dite amplificateur (9′) par une vitesse de régulation si basse, que les changements lents de couleur du matériel en fibres (1) sont supprimés, pendant qu'un changement de couleur abrupte du matériel en fibre déclenche un signal de sortie.

2. Appareil selon revendication 1, où à l'aide de lentilles (3) et diviseurs de rayon (4), la lumière de la même partie du matériel en fibre est dirigée sur deux ou plusieurs capteurs (6,6′).

3. Appareil pour la détection de contaminations, corps et fibres étrangers dans du matériel en fibres textiles, particulièrement dans le fil, comprenant:
au moins deux sources de lumières (11, 11′) avec longueurs d'ondes différentes,
au moins deux boosters (17,17′) servant au fonctionnement de ces sources lumières, et où au moins par un des dites boosters (17′) est commandé l'intensité de la lumière d'au moins une des sources de lumière (11′),
un générateur de rectangle (16) qui commande ces boosters pour une illumination alternante du matériel en fibres,
un capteur (14) en fonctionnement multiplex pour la reception de la lumière reflétée par le matériel en fibres et où la sortie de ce capteur est liée avec un amplificateur (15) la sortie de cet amplificateur avec un discriminateur de phases (18), qui compare la phase de la tension de sortie avec celle du générateur de rectangle (16) et dont la sortie est liée avec un régulateur (19), qui lui-même est lié avec au moins un booster (17′) et qui commande le dite booster, et où la vitesse de régulation du régulateur (19) est si basse, que les différences d'intensité, se créant lentement, sont supprimées entre la lumière reflétée de longueurs d'ondes différentes, pendant qu'en présence d'une différence d'intensité abrupte, un signal correspondant est envoyé à la sortie de l'amplificateur (15).

4. Appareil selon revendication 3, pourvu d'un ou plusieurs LEDs bicolores comme sources de lumière (11,11′).
